# EUROPÄISCHE PATENTANMELDUNG

(11) **EP 1 083 771 A2**
(43) Veröffentlichungstag der Anmeldung: **14.03.2001**
(21) Anmeldenummer: 00113754.6
(22) Anmeldetag: 29.06.2000
(51) Int. Cl.: H05B 3/46, H05B 1/02

(54) **Rohrförmiges Heizelement**

(30) Priorität: 09.09.1999 DE 19943192
(71) Anmelder: Hotset Heizpatronen u. Zubehör GmbH, 58511 Lüdenscheid (DE)
(72) Erfinder: Schwarzkopf, Eugen, 58509 Lüdenscheid (DE)
(74) Vertreter: Köchling, Conrad-Joachim

(57) **Zusammenfassung**

Um ein rohrförmiges elektrisches Heizelement zur Beheizung von zylindrischen Teilen, bestehend aus einem Innenrohr (1) aus Metall, einem auf das Innenrohr (1) wendelartig aufgebrachten elektrischen Heizkörper (2), einem rohrförmigen Außenmantel (4) aus Edelstahl, sowie einem mit dem Heizelement kombinierten Thermoelement, das in einem Schutzrohr (7) angeordnet ist, zu schaffen, welches bei möglichst geringen Abmessungen einfach zu fertigen ist und eine leichte Positionierung und einen einfachen Austausch des Thermoelementes ermöglicht, wird vorgeschlagen, dass das Innenrohr (1) einen Längsschlitz (8) aufweist, und dass das Schutzrohr (7) in den Längsschlitz (8) eingebracht und lagegesichert gehalten ist, wobei der Thermomesspunkt durch verschiebliche Anordnung der Metalldrähte des Thermoelementes oder des kompletten Thermoelementes in dem Schutzrohr an beliebiger Stelle des Schutzrohres oder vor der Mündung des Schutzrohres positionierbar ist.

## Beschreibung

Die Erfindung betrifft ein rohrförmiges elektrisches Heizelement zur Beheizung von zylindrischen Teilen, insbesondere für industrielle Anlagen und/oder zur Beheizung von Teilen von Spritzgießwerkzeugen, bestehend aus einem Innenrohr aus gut wärmeleitendem Material, insbesondere Metall, vornehmlich Kupfer oberflächenbehandelt gegen Korrosion oder Messing, einem auf das Innenrohr wendelartig aufgebrachten elektrischen Heizkörper in Form einer dünnen, zu einer Wendel formbaren Heizpatrone, einem rohrförmigen Außenmantel aus vorzugsweise schlecht wärmeleitendem Material, zum Beispiel Edelstahl, der auf das mit dem Heizkörper bestückte Innenrohr aufgebracht ist, sowie einem mit dem Heizelement kombinierten Thermoelement, bestehend aus zwei Metalldrähten, die endseitig den Meßpunkt bildend miteinander verbunden, insbesondere verschmolzen sind, wobei das Thermoelement in einem dünnen Schutzrohr angeordnet ist. Derartige Heizelemente sind im Stand der Technik bekannt. Sie dienen zur Beheizung von zylindrischen Teilen, Düsen oder dergleichen, beispielsweise für Spritzgieß- oder Druckgießanlagen, wobei das Heizelement rohrförmig ausgebildet ist und auf das zu beheizende entsprechende zylindrische Teil aufgeschoben wird.

Im Stand der Technik besteht beispielsweise das Innenrohr des rohrförmigen Heizelementes aus Kupfer oder Messing. Auf das Innenrohr ist wendelartig ein elektrischer Heizkörper in Form einer sogenannten Wendelrohrpatrone aufgebracht. Ein solcher Heizkörper besteht aus einem dünnen rohrförmigen, zu einer Wendel formbarem Teil aus Metall, in welches der Heizdraht und eine elektrische Isolierung, beispielsweise in Form von Keramikpulver (MgO) eingebracht und verdichtet ist. An den Enden des rohrförmigen Teiles ist der Heizleiter herausgeführt und die Mündung des rohrförmigen Teiles isoliert, wobei die Enden der Heizleiter unmittelbar oder mittelbar an entsprechende elektrische Anschlußleitungen angeschlossen werden können. Außenseitig ist das Heizelement mit einem rohrartigen Außenmantel aus schlecht wärmeleitendem Material umgeben, beispielsweise aus Edelstahl. Der so gebildete Außenmantel ist vorzugsweise auf das Innenrohr mit wendelartigem Heizkörper aufgepresst oder auch in anderer Weise mit der wendelförmigen Heizpatrone verbunden.

Es ist auch üblich, in ein derartiges Heizelement ein Thermoelement einzubringen, welches aus zwei ein Thermopaar bildenden Metalldrähten, beispielsweise aus Konstantan oder ähnlich geeignetem Metall besteht, die an ihrem Ende an der Bildung des Meßpunktes miteinander verschmolzen sind. Die anderen Enden der Metalldrähte sind abgeführt und mit einem entsprechenden elektrischen Anschlußteil verbunden. Bei der herkömmlichen Bauart ist es erforderlich, das Thermoelement in geeigneter Weise in das Heizelement zu integrieren, was deswegen schwierig ist, weil der eigentliche Heizkörper in Wendelform zwischen dem Innenmantel und dem Außenmantel des Heizelementes angeordnet ist. Zudem ist es nicht möglich, nach der endgültigen Fertigstellung des Heizelementes die Position des Meßpunktes des Thermoelementes relativ zur Länge des Heizelementes zu verändern. Vielmehr ist die einmal gewählte Position endgültig und kann nicht mehr variiert werden.

Ausgehend von diesem Stand der Technik liegt der Erfindung die Aufgabe zugrunde, ein rohrförmiges elektrisches Heizelement zu schaffen, welches bei möglichst geringem Außendurchmesser und bei exakt dem zu beheizenden Teil angepassten Innendurchmesser einfach zu fertigen ist und eine leichte Positionierung und einen einfachen Austausch des Thermomesspunktes des Thermoelementes auch nach Fertigstellung des rohrförmigen Heizelementes ermöglicht.

Zur Lösung dieser Aufgabe wird vorgeschlagen, dass das Innenrohr einen Längsschlitz oder eine Längsnut aufweist, und dass das Schutzrohr in die Längsnut oder den Längsschlitz eingebracht und lagegesichert gehalten ist, wobei der Thermomesspunkt durch verschiebliche Anordnung der Metalldrähte des Thermoelementes oder des kompletten Thermoelementes in dem Schutzrohr an beliebiger Stelle des Schutzrohres oder vor der Mündung des Schutzrohres positionierbar ist.

Gemäß der Erfindung weist das Innenrohr vorzugsweise einen Längsschlitz oder auch eine Längsnut auf, wobei eine Längsnut nur eine mögliche, nicht aber eine bevorzugte Ausbildung ist.

Das Schutzrohr, in welchem die das Thermoelement bildende Metalldrähte samt Meßpunkt angeordnet werden können, ist in die Längsnut oder den vorzugsweise vorgesehenen Längsschlitz eingebracht und lagegesichert gehalten. Aufgrund dieser Bauart kann das Innenrohr bezüglich seines Innendurchmessers exakt auf das zu beheizende zylindrische Teil angepasst werden, ohne dass das Thermoelement beziehungsweise dessen Schutzrohr nach radial innen über den Innenmantel des Innenrohres vorragt oder auch über den Außenmantel des Innenrohres vorragt. Demzufolge kann der entsprechende Heizkörper wendelartig auf das Innenrohr aufgebracht werden und ebenso der rohrförmige Außenmantel aufgebracht werden, ohne dass hierbei das Schutzrohr für das Thermoelement stört oder zu einer Durchmesservergrößerung eines der Teile führen würde. Insbesondere ist auch ausgeschlossen, dass beim Verpressen des Außenmantels auf das Innenrohr samt aufgewendeltem Heizkörper das Schutzrohr des Thermoelementes verformt oder verpresst wird. Nach der Fertigstellung des rohrförmigen elektrischen Heizelementes, bestehend aus Innenrohr, wendelartig aufgebrachtem elektrischem Heizkörper, Schutzrohr und Außenmantel kann das eigentliche Thermoelement in das Schutzrohr von einer der beiden an den Enden des rohrförmigen Heizelementes befindlichen Mündungen her eingeschoben werden, und zwar bis zu einer Position, die hinsichtlich des Thermomesspunktes vom Anwender bestimmt werden kann. Auch das Auswechseln eines defekten Thermoelementes ist in einfacher Weise auf diese Art sichergestellt. Es wird also ein rohrförmiges elektrisches Heizelement zur Verfügung gestellt, welches trotz Anordnung eines Thermoelementes weder bezüglich des Außendurchmessers noch bezüglich des Innendurchmessers vergrößert sein muss, welches einfach zu fertigen ist, und welches eine leichte Positionierung des Thermomesspunktes des Thermoelementes gestattet.

Bevorzugt ist vorgesehen, dass das Schutzrohr in der Längsnut oder dem Längsschlitz bündig angeordnet ist, so dass es nicht über den Innenmantel und nicht oder nur gering über den Außenmantel des Innenrohres vorragt.

Zudem kann vorgesehen sein, dass der Außendurchmesser des Schutzrohres gleich oder kleiner ist als die Wandstärke des den Längsschlitz aufweisenden Innenrohres.

Bevorzugt kann auch vorgesehen sein, dass die Breite des Längsschlitzes größer ist als der Außendurchmesser des Schutzrohres.

Insbesondere dabei ist vorgesehen, dass das Schutzrohr an der einen Schlitzrandkante des Längsschlitzes befestigt ist.

Durch diese Anordnung kann einerseits das Schutzrohr einfach am Innenmantel befestigt werden, wobei es weder über den Außenmantel des Innenrohres noch über den Innenmantel des Innenrohres vorragt. Andererseits kann durch diese Anordnung auch eine temperaturbedingte Verengung des Längsschlitzes bei Inbetriebnahme des Heizelementes erfolgen, ohne dass hierdurch das Schutzrohr gequetscht oder in anderer Weise verformt wird. Das Heizelement (der Heizkörper) kann aber einen festen Sitz in seiner Sollposition erhalten.

Vorzugsweise kann auch vorgesehen sein, dass das Schutzrohr stoffschlüssig mit dem Innenrohr beziehungsweise der einen Randkante des Längsschlitzes des Innenrohres verbunden ist.

Desweiteren ist vorzugsweise vorgesehen, dass das Schutzrohr aus hochwärmeleitfähigem Werkstoff besteht, einen Außendurchmesser von etwa einem Millimeter und eine Wandstärke von etwa 0,15 mm aufweist.

Desweiteren kann vorgesehen sein, dass der rohrartige Außenmantel auf das mit dem Heizkörper bestückte Innenrohr aufgepresst ist oder mindestens mit dem Heizkörper stoffschlüssig verbunden ist.

Ein Ausführungsbeispiel der Erfindung ist in der Zeichnung dargestellt und im folgenden näher beschrieben. Es zeigt:
- Figur 1: ein rohrförmiges elektrisches Heizelement in Ansicht, teilweise aufgebrochen;
- Figur 2: eine Einzelheit der Figur 1 in Schrägansicht.

In der Zeichnung ist ein rohrförmiges elektrisches Heizelement zur Beheizung von zylindrischen Teilen, insbesondere für industrielle Zwecke, gezeigt. Es besteht aus einem Innenrohr 1 aus gut wärmeleitendem Metall, beispielsweise Kupfer oder Messing, einem auf das Innenrohr wendelartig aufgebrachten elektrischen Heizkörper 2 in Form eines dünnen, zu einer Wendel formbaren Heizelementes, deren Anschlüsse 3 an einem Ende des rohrförmigen Heizelementes radial abgeführt sind, einem rohrförmigen Außenmantel 4 aus schlecht wärmeleitendem Metall, beispielsweise Edelstahl, der auf das mit dem Heizkörper 2 bestückte Innenrohr 1 aufgebracht ist, sowie einem mit dem Heizelement kombinierten Thermoelement, bestehend aus zwei Metalldrähten 5, die endseitig den Meßpunkt 6 bildend miteinander verschmolzen sind. Das Thermoelement (5,6) ist in einem dünnen Schutzrohr 7 angeordnet.

Das Innenrohr 1 weist einen durchgehenden Längsschlitz 8 auf. Das Schutzrohr 7 ist in den Längsschlitz 8 eingebracht und lagegesichert gehalten, wobei der Thermomesspunkt 6 durch verschiebliche Anordnung der Metalldrähte 5 des Thermoelementes in dem Schutzrohr 7 an beliebiger Stelle des Schutzrohres 7 oder vor der Mündung des Schutzrohres 7 positionierbar ist.

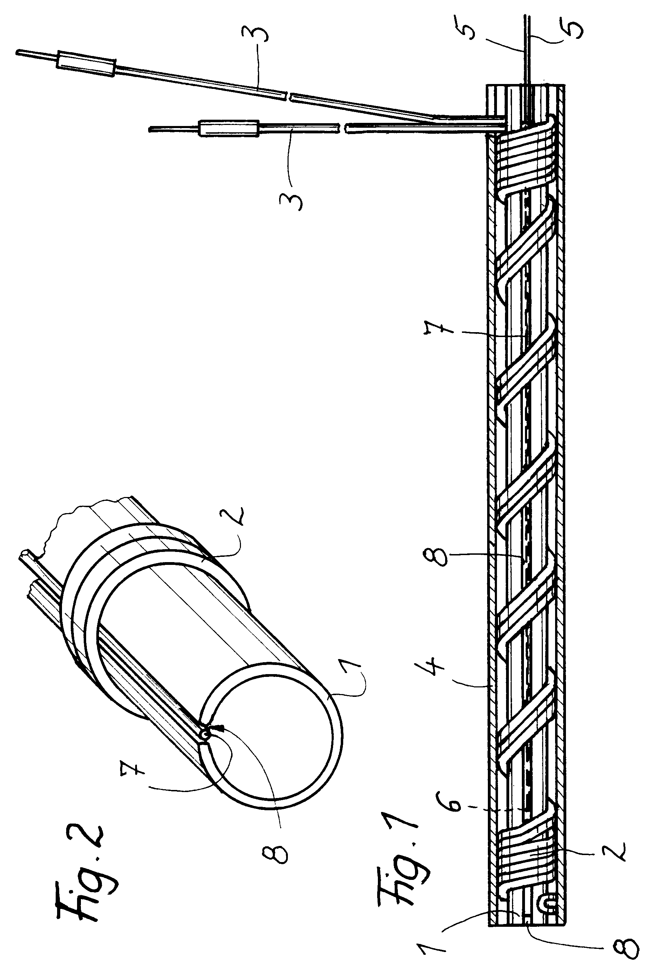

Das Schutzrohr 7 ist in dem Längsschlitz 8 bündig angeordnet, so dass es weder über den Innenmantel noch über den Außenmantel des Innenrohres 1 vorragt. Dazu ist vorzugsweise der Außendurchmesser des Schutzrohres 7 gering kleiner als die Wandstärke des den Längsschlitz 8 aufweisenden Innenrohres 1. Auch die Breite des Längsschlitzes 8 ist größer als der Außendurchmesser des Schutzrohres 7. Dabei ist das Schutzrohr 7 an der einen Schlitzrandkante des Innenrohres 1 befestigt, so dass die andere Randkante des Innenrohres 1 in Umfangsrichtung einen Abstand von dem Schutzrohr 7 aufweist, wie insbesondere aus Figur 2 ersichtlich ist. Vorzugsweise ist das Schutzrohr 7 stoffschlüssig mit dem Innenrohr 1 an der den Schlitz bildenden Randkante fixiert, beispielsweise durch Verlötung. Das Schutzrohr 7 besteht vorzugsweise auch aus hochwärmeleitfähigem Werkstoff, insbesondere Metall, wobei es einen Außendurchmesser von beispielsweise 1 mm und eine Wandstärke von ca. 0,15 mm aufweisen kann. Die Wandstärke des Innenrohres 1 ist demzufolge etwa 1 mm oder geringfügig größer als 1 mm.

In der Soliposition, wie sie in Figur 1 verdeutlicht ist, ist der rohrartige Außenmantel 4, der in Figur 1 aufgebrochen gezeigt ist, auf das mit dem Heizkörper 2 bestückte Innenrohr 1 aufgepresst, so dass die Sollage der Einzelteile zueinander fixiert ist.

Trotz dieser Anordnung ist es möglich, durch Verschiebung der Drähte 5 oder eines fertigen Mantelthermoelementes innerhalb des Schutzrohres 7 die Position des Thermomesspunktes 6 beliebig einzustellen, wie dies vom Anwender gewünscht ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Rohrförmiges elektrisches Heizelement zur Beheizung von zylindrischen Teilen, insbesondere für industrielle Anlagen und/oder zur Beheizung von Teilen von Spritzgießwerkzeugen, bestehend aus einem Innenrohr (1) aus gut wärmeleitendem Material, insbesondere Metall, vornehmlich Kupfer oder Messing, einem auf das Innenrohr (1) wendelartig aufgebrachten elektrischen Heizkörper (2) in Form einer dünnen, zu einer Wendel formbaren Heizelementes, einem rohrförmigen Außenmantel (4) aus vorzugsweise schlecht wärmeleitendem Material, zum Beispiel Edelstahl, der auf das mit dem Heizkörper (2) bestückte Innenrohr (1) aufgebracht ist, sowie einem mit dem Heizelement kombinierten Thermoelement, bestehend aus zwei Metalldrähten (5), die endseitig den Meßpunkt (6) bildend miteinander verbunden, insbesondere verschmolzen sind, wobei das Thermoelement in einem dünnen Schutzrohr (7) angeordnet ist, **dadurch gekennzeichnet, dass** das Innenrohr (1) einen Längsschlitz (8) oder eine Längsnut aufweist, und dass das Schutzrohr (7) in die Längsnut oder den Längsschlitz (8) eingebracht und lagegesichert gehalten ist, wobei der Thermomesspunkt (6) durch verschiebliche Anordnung der Metalldrähte (5) des Thermoelementes in dem Schutzrohr (7) an beliebiger Stelle des Schutzrohres (7) oder vor der Mündung des Schutzrohres (7) positionierbar ist und/oder das Thermoelement auswechselbar im Schutzrohr angeordnet ist.

2. Heizelement nach Anspruch 1, **dadurch gekennzeichnet, dass** das Schutzrohr (7) in der Längsnut oder dem Längsschlitz (8) bündig angeordnet ist, so dass es nicht über den Innenmantel und nicht oder nur gering über den Außenmantel des Innenrohres (1) vorragt.

3. Heizelement nach Anspruch 1 oder 2, **dadurch gekennzeichnet, dass** der Außendurchmesser des Schutzrohres (7) gleich oder kleiner ist als die Wandstärke des den Längsschlitz (8) aufweisenden Innenrohres (1).

4. Heizelement nach einem der Ansprüche 1 bis 3, **dadurch gekennzeichnet, dass** die Breite des Längsschlitzes (8) größer ist als der Außendurchmesser des Schutzrohres (7).

5. Heizelement nach einem der Ansprüche 1 bis 4, **dadurch gekennzeichnet, dass** das Schutzrohr (7) an der einen Schlitzrandkante des Längsschlitzes (8) befestigt ist.

6. Heizelement nach einem der Ansprüche 1 bis 5, **dadurch gekennzeichnet, dass** das Schutzrohr (7) stoffschlüssig mit dem Innenrohr (1) beziehungsweise der einen Randkante des Längsschlitzes (8) des Innenrohres (1) verbunden ist.

7. Heizelement nach einem der Ansprüche 1 bis 6, **dadurch gekennzeichnet, dass** das Schutzrohr (7) aus hochwärmeleitfähigem Werkstoff besteht, einen Außendurchmesser von etwa einem Millimeter und eine Wandstärke von etwa 0,15 mm aufweist.

8. Heizelement nach einem der Ansprüche 1 bis 7, **dadurch gekennzeichnet, dass** der rohrartige Außenmantel (4) auf das mit dem Heizkörper (2) bestückte Innenrohr (1) aufgepresst ist oder mindestens mit dem Heizkörper (2) stoffschlüssig verbunden ist.
